**Europäisches Patentamt**

**European Patent Office**

(19)

**Office européen des brevets**

(11) Veröffentlichungsnummer : **0 305 416 B1**

(12) **EUROPÄISCHE PATENTSCHRIFT**

(45) Veröffentlichungstag der Patentschrift :
**02.01.92 Patentblatt 92/01**

(51) Int. Cl.⁵ : **F24D 3/00,** F02G 5/02,
F02G 5/04

(21) Anmeldenummer : **88901599.6**

(22) Anmeldetag : **18.02.88**

(86) Internationale Anmeldenummer :
**PCT/EP88/00119**

(87) Internationale Veröffentlichungsnummer :
**WO 88/06258 25.08.88 Gazette 88/19**

(54) **VORRICHTUNG ZUR WÄRMEGEWINNUNG UNTER VERWENDUNG EINER WÄRMEPUMPENANLAGE.**

(30) Priorität : **19.02.87 DE 3705332**

(43) Veröffentlichungstag der Anmeldung :
**08.03.89 Patentblatt 89/10**

(45) Bekanntmachung des Hinweises auf die
Patenterteilung :
**02.01.92 Patentblatt 92/01**

(84) Benannte Vertragsstaaten :
**AT BE DE FR GB NL SE**

(56) Entgegenhaltungen :
**DE-A- 2 604 129**
**DE-A- 2 804 841**
**DE-A- 2 804 895**
**FR-A- 2 234 795**
**Patent Abstract of Japan, Band 11, Nr. 1**
**(M-550) (2448), 6. Januar 1987**

(73) Patentinhaber : **DALIN, Pär**
**Murarvägen 7**
**S-161 45 Bromma (SE)**
Patentinhaber : **GORANSSON, Per**
**Jaktvägen 76**
**S-183 41 Täby (SE)**

(72) Erfinder : **DALIN, Pär**
**Murarvägen 7**
**S-161 45 Bromma (SE)**
Erfinder : **GORANSSON, Per**
**Jaktvägen 76**
**S-183 41 Täby (SE)**

(74) Vertreter : **Popp, Eugen, Dr. et al**
**MEISSNER, BOLTE & PARTNER**
**Widenmayerstrasse 48 Postfach 86 06 24**
**W-8000 München 86 (DE)**

EP 0 305 416 B1

## Beschreibung

Die Erfindung betrifft eine Vorrichtung zur Wärmegewinnung unter Verwendung einer Wärmepumpenanlage gemäß dem Oberbegriff des einzigen Patentanspruches.

Eine derartige Vorrichtung ist im Rahmen einer Heizungsanlage aus der DE-A-28 04 841 bekannt. Ziel dieser bekannten Vorrichtung ist es, eine mit Wärmepumpen zu betreibende Heizungsanlage kostengünstiger zu gestalten. Zu diesem Zweck ist vorgeschlagen, den der Abgasleitung des Verbrennungsmotors zugeordneten Wärmetauscher durch einen einfachen, serienmäßig und somit kostengünstig hergestellten Heizungskessel zu ersetzen, der sowohl mit als auch ohne Brenner bzw. zusätzlicher Brennstoffzufuhr betrieben werden kann.

Der vorliegenden Erfindung liegt die Aufgabe zugrunde, den Wirkungsgrad der bekannten Vorrichtung zusätzlich zu erhöhen, und zwar durch zusätzliche Ausnutzung der Abgaswärme unter gleichzeitiger Reduzierung des Schadstoffgehalts der Abgase.

Diese Aufgabe wird durch die kennzeichnenden Merkmale des Patentanspruches gelöst.

Entsprechend dem erfindungsgemäßen Vorschlag erfolgt im Anschluß an die Nachverbrennung eine Abkühlung der ins Freie entweichenden Abgase, wobei die dafür verwendeten Abgaskühler zugleich Verdampfer der Wärmepumpenanlage sind. Die Abgaskühlung erfolgt also unter entsprechendem Wärmeentzug zur Vorwärmung des Wärmeenergieträgers.

Die Abkühlung der ins Freie entweichenden Abgase erfolgt vorzugsweise in Stufen bis zur Kondensatbildung, wobei das letztlich anfallende Kondensat gesammelt und entfernt wird. Auf diese Weise entweicht ins Freie ein äußerst schadstoffarmes Abgas mit relativ niedriger Temperatur, die jedoch noch etwas höher sein muß als die Umgebungstemperatur, um einen ausreichenden Abzug zu gewährleisten. Gegebenenfalls können jedoch noch Abgas-Gebläse vorgesehen sein.

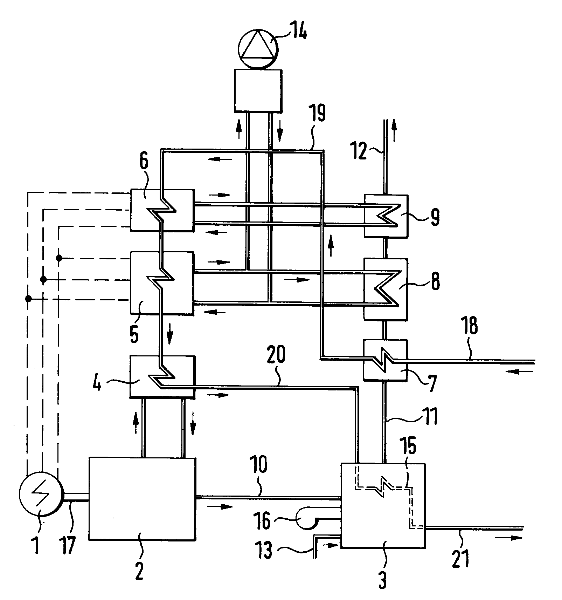

Nachstehend wird eine Ausführungsform der Erfindung anhand der beigefügten Zeichnung näher erläutert. In dieser bedeutet die Bezugsziffer 2 einen Verbrennungsmotor, der zum Antrieb von zwei hintereinander angeordneten Wärmepumpen 6 und 5 dient, und zwar jeweils über einen elektrischen Generator 1. Der elektrische Generator 1 ist mit dem Verbrennungsmotor 2 über eine Antriebswelle 17 gekoppelt. Die Verbrennungs- bzw. Abgase des Verbrennungsmotors 2 werden durch eine Abgasleitung 10 zu einer Abgas-Nachverbrennungseinheit 3 geleitet, der ein Ölbrenner 16 sowie eine gesonderte Zuluftleitung 13 zugeordnet ist. Sowohl dem Verbrennungsmotor 2 als auch der Nachverbrennungseinheit 3 ist jeweils ein Wärmetauscher 4 bzw. 15 zugeordnet, mittels denen die Abwärme des Verbrennungsmotors 2 bzw. die durch die Nachverbrennung frei werdende Wärme an einen durch die erwähnten Wärmepumpen 5 und 6 bereits vorerwärmten Wärmeenergieträger, insbesondere Wasser einer Heizungsanlage, übertragbar ist. Der Wärmeenergieträger, insbesondere Wasser, strömt durch die Leitungsabschnitte 18, 19, 20 und 21. Durch den Leitungsabschnitt 21 verläßt der Wärmeenergieträger die Wärmegewinnungs-Vorrichtung mit vorgegebener erhöhter Temperatur. Durch den Leitungsabschnitt 18 strömt der abgekühlte Wärmeenergieträger wieder zurück.

Dem Abgaskanal 11, 12, durch den die nachverbrannten Abgase ins Freie entweichen, sind ein vom Wärmeenergieträger durchströmter Wärmetauscher 7 sowie zwei Abgaskühler 8 und 9 zugeordnet, welche als Verdampfer der Wärmepumpen 5 und 6 dienen. Der Wärmetauscher 7 liegt zwischen den Leitungsabschnitten 18 und 19, an den sich unmittelbar die beiden Wärmepumpen 6 und 5 anschließen. Demnach wird durch den Wärmetauscher 7 der abgekühlte

Wärmeenergieträger, z.B. Wasser, bereits vorerwärmt, bevor er die Wärmepumpen 6 und 5 erreicht. Dort wird der Wärmeenergieträger zweistufig, nämlich zunächst durch die Wärmepumpe 6 und anschließend durch die Wärmepumpe 5, auf erhöhte Temperatur gebracht. Die dafür erforderliche Energie wird zum einen durch die Abgaskühler 8 und 9 den ins Freie entweichenden Abgasen der Nachverbrennungseinheit 3 und zum anderen der Umgebung durch einen Luft-, Wasser- und/oder Erdkollektor 14 entzogen. Der vor dem Abgasaustritt 12 angeordnete Abgaskühler 9 ist als Verdampfer der als erstes wirksamen Wärmepumpe 6 zugeordnet, während der in Abgas-Strömungsrichtung gesehen vor dem Abgaskühler 9 angeordnete Abgaskühler 8 sowie der Luft-, Wasser- und/oder Erdkollektor 14 als Verdampfer der der Wärmepumpe 6 nachgeordneten Wärmepumpe 5 dienen. Auf diese Weise wird eine allmähliche Erwärmung des abgekühlten Wärmeenergieträgers erreicht, wobei eine erste Erwärmung im im Abgaskanal 11 angeordneten Wärmetauscher 7 erfolgt.

In dem den Wärmepumpen 6 und 5 nachgeordneten Wärmetauscher 4, durch den die übertragung eines Teils der Abwärme des Verbrennungsmotors 2 erfolgt, wird die Temperatur des Wärmeenergieträgers weiter erhöht. Durch den anschließenden Leitungsabschnitt 20 gelangt der Wärmeenergieträger zur Nachverbrennungseinheit 3, in der der Wärmeenergieträger auf eine noch höhere vorgegebene Temperatur gebracht wird. Die Wärmeübertragung erfolgt durch einen in der Nachverbrennungseinheit 3 angeordneten wärmetauscher 15. Es ist auch denkbar, die den Wärmeenergieträger führende Leitung 20 unmittelbar durch die Nachverbrennungseinheit 3 hindurchzuführen, d.h. den Flammen in der Nachverbrennungseinheit 3 unmittelbar auszusetzen. In diesem Fall ist jedoch eine genaue Temperaturregelung des Wärmeenergieträgers schwieriger.

2

Wie bereits oben dargelegt, ist der Nachverbrennungseinheit 3 zusätzlich ein Ölbrenner 16 zugeordnet, der auch dazu dient, die Nachverbrennung der Abgase des Verbrennungsmotors 2 auszulösen und aufrechtzuerhalten. Der Ölverbrauch ist jedoch denkbar gering, da ein nicht unerheblichen Teil des Brennstoffs durch die Abgase des Verbrennungsmotors 2 gebildet wird. Des weiteren ist zur Aufrechterhaltung einer möglichst vollständigen Abgas-Verbrennung eine Zuluftleitung 13 vorgesehen, durch die der noch notwendige Sauerstoff in den Verbrennungsraum der AbgasNachverbrennungseinheit 3 geleitet wird.

Im Abgaskanal 11, 12 wird das Abgas (Rauchgas) bis auf 50 °C abgekühlt. Bei einer weiteren Abkühlung bis auf etwa 20 °C sind Abgas-Gebläse erforderlich, um einen ausreichenden Abzug der Abgase ins Freie zu gewährleisten.

Am Abgaskühler 9 kann es zur Kondensation von Stickstoffoxiden, Kohlenwasserstoffen usw., kommen. Das entstehende Kondensat wird vorzugsweise gesammelt und entfernt. Die ins Freie entweichenden Abgase sind dementsprechend schadstofffrei und relativ umweltfreundlich im Vergleich zu den Abgase herkömmlicher Wärmepumpenanlagen mit einem Verbrennungsmotor als Antrieb.

## Patentansprüche

1. Vorrichtung zur Wärmegewinnung unter Verwendung einer Wärmepumpenanlage
   – mit einem als Luft-, Wasser- und/oder Erdkollektor ausgebildeten Verdampfer (14),
   – einem Verbrennungsmotor (2) als Antrieb für die Wärmepumpe, wobei dem Verbrennungsmotor (2) Abgaswärmetauscher (8, 9) zur Ausnutzung der Abgaswärme zugeordnet sind,
   – einer Verbrennungseinheit (3) zur Nachverbrennung der Abgase des Verbrennungsmotors (2), und
   – mit sowohl dem Verbrennungsmotor (2) als auch der Nachverbrennungseinheit (3) zugeordneten Wärmetauschern (4, 15), mittels denen die Abwärme des Verbrennungsmotors (2) und die durch die Nachverbrennung freiwerdende Wärme an einen durch die Wärmepumpe (5, 6) bereits vorerwärmten Energieträger, insbesondere Wasser, übertragbar ist,
   – wobei die Abgas-Nachverbrennungseinheit (3) einen Brenner mit zusätzlicher Brennstoffzufuhr, insbesondere Ölbrenner (16), sowie eine regelbare Ergänzungs-Luftzufuhr (13) aufweist,
   dadurch gekennzeichnet, daß
   – zwei Abgaswärmetauscher (8, 9) im Abgaskanal (11, 12) der Abgas-Nachverbrennungseinheit (3) angeordnet sind,
   – wobei der eine Abgaswärmetauscher (8) einer ersten Wärmepumpe (5) zugeordnet ist und zugleich als zusätzlicher Verdampfer zum Luft-, Wasser- und/oder Erdkollektor (14) dient,
   – während der andere Abgaswärmetauscher (9) als einziger Verdampfer einer zweiten Wärmepumpe (6) zugeordnet ist, mittels dem das Abgas vor Entweichen ins freie noch weiter - gegebenenfalls bis zur Kondensatbildung - abkühlbar ist.

## Claims

1. Device for heat recovery, using a heat pump installation
having a vaporiser (14) designed as an air collector, water collector and/or earth collector,
   – an internal combustion engine (2) as a drive for the heat pump, the internal combustion engine (2) being associated with exhaust gas heat exchangers (8, 9) to utilise the exhaust gas heat,
   – a combustion unit (3) for postcombustion of the exhaust gases of the internal combustion engine (2) and
   – having heat exchangers (4, 15) which are associated with both the internal combustion engine (2) and the postcombustion unit (3) and by means of which the waste heat of the internal combustion engine (2) and the heat released by the postcombustion are transferable to an energy carrier, especially water, which has already been preheated by the heat pump (5, 6),
the exhaust gas postcombustion unit (3) having a burner with an additional fuel supply, in particular an oil burner (16), and a controllable secondary air supply (13),
characterised in that
   – two exhaust gas heat exchangers (8, 9) are located in the exhaust gas duct (11, 12) of the exhaust gas-postcombustion unit (3),
   – one exhaust gas heat exchanger ( 8 ) being associated with a first heat pump (5) and at the same time serving as an additional vaporiser for the air collector, water collector and/or earth collector (14),
   – while the other exhaust gas heat exchanger (9) is associated as a sole vaporiser with a second heat pump (6), by means of which the exhaust gas can be cooled even further - if appropriate down to the formation

EP 0 305 416 B1

of condensate - before escaping into the open.

## Revendications

1. Dispositif pour produire de la chaleur en utilisant une installation de pompe à chaleur, comprenant
   – un évaporateur (14) sous la forme d'un collecteur d'air, d'eau ou de terre,
   – un moteur thermique (2) pour l'entraînement de la pompe à chaleur, auquel sont associés des échangeurs de chaleur des gaz d'échappement (8,9) pour la récupération de la chaleur d'échappement,
   – une unité de combustion (3) pour la postcombustion des gaz d'échappement du moteur thermique (2), et
   – des échangeurs de chaleur (4,15) associés tant au moteur thermique (2) qu'à l'unité de postcombustion (3), grâce auxquels la chaleur d'échappement du moteur thermique (2) et la chaleur dégagée par la postcombustion peuvent être transférées à un vecteur d'énergie, en particulier de l'eau, déja préchauffé par la pompe à chaleur (5,6),
   – l'unité de postcombustion des gaz d'échappement (3) comportant un brûleur avec arrivée de combustible supplémentaire, en particulier un brûleur à mazout (16), ainsi qu'une arrivée d'air complémentaire réglable (13),
   caractérisé en ce que
   – deux échangeurs de chaleur des gaz d'échappement (8,9) sont disposés dans le canal d'échappement (11,12) de l'unité de postcombustion des gaz d'échappement,
   – l'un des échangeurs de chaleur des gaz d'échappement (8) étant associé à une première pompe à chaleur et servant en même temps d'évaporateur en supplément du collecteur d'air, d'eau ou de terre (14),
   – tandis que l'autre échangeur de chaleur des gaz d'échappement (9) est associé à une seconde pompe à chaleur (6) en tant qu'évaporateur unique, au moyen duquel les gaz d'échappement peuvent être refroidis davantage encore - le cas échéant jusqu'à la formation d'un condensat - avant d'être évacués à l'air libre.

4